# EUROPEAN PATENT SPECIFICATION

(11) **EP 3 110 197 B1**
(45) Date of publication and mention of the grant of the patent: **13.06.2018**
(21) Application number: 14887428.2
(22) Date of filing: 28.09.2014
(51) Int. Cl.: H04W 8/02

(54) **METHOD FOR APPLICATION DETECTION AND CONTROL IN ROAMING SCENARIO AND V-PCRF**
VERFAHREN ZUR ANWENDUNGSERKENNUNG UND -STEUERUNG IN EINEM ROAMING-SZENARIO UND V-PCRF
PROCÉDÉ DE DÉTECTION ET DE CONTRÔLE D'APPLICATION DANS UN SCÉNARIO D'ITINÉRANCE ET UNE V-PCRF

(30) Priority: 24.03.2014 CN 201410111396
(43) Date of publication of application: 28.12.2016
(73) Proprietor: ZTE Corporation, Shenzhen, Guangdong 518057 (CN)
(72) Inventor: ZHOU, Xiaoyun, Shenzhen Guangdong 518057 (CN)
(74) Representative: Schröer, Gernot H.
(86) International application number: PCT/CN2014/087704
(87) International publication number: WO 2015/143856

(56) References cited:
- EP-A1- 2 624 607
- CN-A- 101 677 437
- CN-A- 101 969 632
- CN-A- 103 220 651
- CN-A- 103 227 981
- CN-A- 103 444 226
- "3rd Generation Partnership Project; Technical Specification Group Services and System Aspects; Policy and charging control architecture (Release 12)", 3GPP DRAFT; 23203-C40, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 10 March 2014 (2014-03-10), XP050835329, Retrieved from the Internet: URL:http://www.3gpp.org/ftp/tsg_sa/WG2_Arc h/Latest_SA2_Specs/Rel-12/ [retrieved on 2014-03-10]
- "3rd Generation Partnership Project; Technical Specification Group Core Network and Terminals; Policy and Charging Control (PCC) over S9 reference point; Stage 3 (Release 12)", 3GPP STANDARD; 3GPP TS 29.215, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG3, no. V12.3.0, 10 March 2014 (2014-03-10), pages 1-89, XP050769665, [retrieved on 2014-03-10]
- SAMSUNG: "UE Initiated QoS for S9-less Scenarios", 3GPP DRAFT; S2-114876-23203CR0603-UE-INIT-QOS-S9LESS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. San Francisco, USA; 20111114 - 20111118, 7 November 2011 (2011-11-07), XP050575302, [retrieved on 2011-11-07]
- ERICSSON ET AL: "ADC rule handling as PCEF enhancement", 3GPP DRAFT; S2-112283_ADC_RULES_DP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, 9 May 2012 (2012-05-09), XP050632420, [retrieved on 2012-05-09]

## Description

### Technical Field

The present invention relates to communication field, and in particular, to a method for application detection and control in a roaming scenario and Visited Policy Control and Charging Rules Function (V-PCRF for short).

### Background of the Related Art

Since the establishment of 3^{rd} Generation Partnership Project Release7 (3GPP Release7) standard system, Policy and Charging function is implemented by a Policy and Charging Control (PCC) framework. A PCC architecture is a functional framework which can be applied to a plurality of access technologies, for example, the PCC architecture can be applied to UMTS Terrestrial Radio Access Network (UTRAN for short) of Universal Mobile Telecommunications System (UMTS for short), Global system for Mobile Communication (GSM for short)/Enhanced Data Rate for GSM Evolution (EDGE for short) radio access network, Interworking WLAN (I-WLAN for short), and Evolved Packet System (EPS for short), etc.

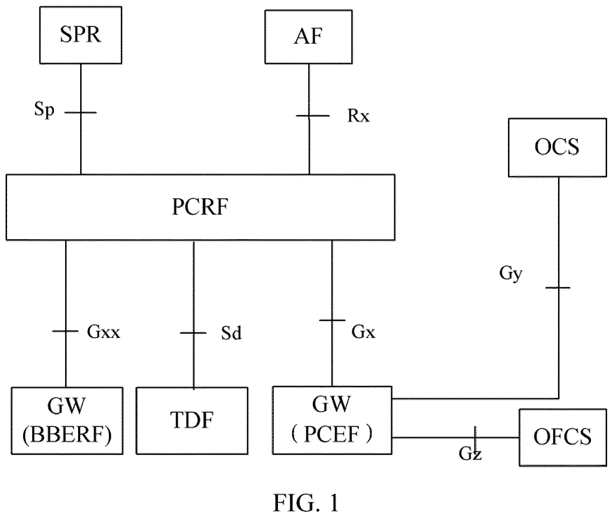

PCC mainly implements two functions of policy control and charging. FIG.1 is a schematic diagram of PCC component architecture of Rel-11, various logic functions and interface functions thereof of the PCC architecture shown in FIG.1 will be described below. As shown in FIG.1:
Application Function (AF for short) is used to provide access points of service applications, and the network resources used by these service applications require a dynamic policy control. When the parameters are negotiated on the service plane, the AF delivers the relevant service information to a Policy Control and Charging Rules Function (PCRF for short). If the service information is consistent with the PCRF policy, the PCRF accepts the negotiation; otherwise, the PCRF refuses the negotiation and gives service parameters that are acceptable by the PCRF in the feedback. The AF may subsequently return these parameters to a User Equipment (UE for short). Wherein, the interface between the AF and the PCRF is an Rx interface.

The PCRF is the core of the PCC and is responsible for a policy decision and establishment of charging rules. The PCRF provides network control rules based on a service data flow, and the network control includes the detection of a service data flow, Gating Control, Quality of Service (QoS for short) control and charging based on a data flow, etc. The PCRF sends policy and charging rules created by itself to a Policy and Control Enforcement Function (PCEF for short) for enforcement; meanwhile, the PCRF is also required to guarantee the consistency of these rules and the subscription information of a user. Wherein, the basis for the PCRF to establish policy and charging rules includes: service-related information obtained from the AF, user policy charging control subscription information related to policy control and charging obtained from user Subscription Profile Repository (SPR for short), and network information related to bearer obtained from the PCEF through a Gx interface.

The PCEF is generally located within a Gate-Way (GW for short), and enforces policy and charging rules created by the PCRF on the bearer plane. The PCEF detects the service data flow according to a service data flow filter in the rules sent by the PCRF, and in turn, enforces policy and charging rules created by the PCRF on these service data flows; upon bearer establishment, the PCEF allocates resources according to rules sent by the PCRF, and performs the control of the gating control according to information provided by the AF; meanwhile, the PCEF triggers reporting events that occurs on a bearer network according to the event subscribed by the PCRF; the PCEF performs a corresponding service data flow charging operation according to the charging rules sent by the PCRF, and the charging may be online charging and also offline charging. If the charging is online charging, the PCEF needs to carry out a credit management with an Online Charging System (OCS for short); during offline charging, relevant charging information is exchanged between the PCEF and Offline Charging System (OFCS for short). Wherein, the interface between the PCEF and the PCRF is a Gx interface, the interface between the PCEF and the OCS is a Gy interface, and the interface between the PCEF and OFCS is a Gz interface. The PCEF may also support an application detection and control function. The PCEF may perform the application detection and policy enforcement (e.g., gating control, redirect and bandwidth limitation) according to the local configuration or a PCC rule containing an application identifier that is provisioned by the PCRF. The PCEF is generally located on the gate-way of the network, such as, the Packet Data Network Gate-way (PDN-GW) of EPS, the Gateway GPRS Support Node (GGSN for short) in the General Packet Radio Service (GPRS for short) and Packet Data Gateway (PDG for short) in the I-WLAN, etc.

Of course, independent Traffic Detection Function (TDF for short) may be deployed to implement application detection in the network, the TDF is connected with the PCRF through an Sd interface, and the TDF may perform the application detection and the policy enforcement according to the pre-configured Application Detection and Control (ADC for short) rules or the ADC rules that are provisioned by the PCRF.

Bearer Binding and Event Reporting Function (BBERF for short) is generally located within an Access Network Gateway. For example, when the UE accesses the EPS through E-UTRAN and Proxy Mobile Internet Protocol version 6 (PMIPv6 for short) is employed between the Service Gateway S-GW and P-GW, the BBERF just exists in the S-GW. When the UE accesses through a trusted non-3GPP access network, the BBERF also exists in the trusted non-3GPP access gateway.

The user policy and charging control subscription information related to the policy control and charging is stored in the SPR, wherein the interface between the SPR and the PCRF is an Sp interface. The OCS and the PCEF complete the control and management of the user credit under the online charging mode together; the OFCS and the PCEF complete the charging operation under the offline charging mode together.

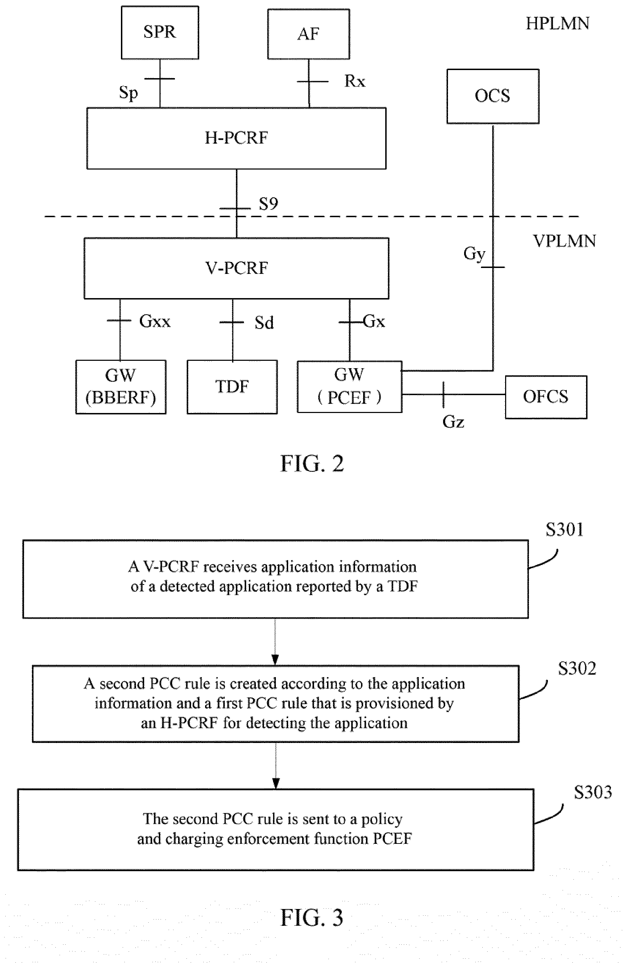

FIG.2 is a schematic diagram of a PCC visited access roaming architecture of Rel-11. A home policy control and charging rules function H-PCRF interworks with a visited policy control and charging rules function V-PCRF through an S9 interface.

In the related art, all the PCC rules are created by the H-PCRF instead of the V-PCRF, and the V-PCRF receives and saves the PCC rules sent by the H-PCRF, if a visited PCRF supports the application detection and control or the visited PCRF deploys the TDF, the H-PCRF provides the PCC rules of an application identifier to the V-PCRF. At this time, if the PCEF supports the application detection and control, the V-PCRF may provide the PCC rules to the PCEF, the PCEF will install/enforce the PCC rules and perform the bearer binding, thereby the QoS is guaranteed for the service detected by the PCC rules. For an scenario in which a visited network deploys TDF, the V-PCRF will extract the ADC rules according to the PCC rules and provide them to the TDF, and the ADC rules are used for the application detection, but since the TDF does not support the bearer binding function, and as a result the QoS cannot be guaranteed for the services detected by the ADC rules.

The documents "3GPP TS 23.203 V12.4.0 (2014-03) Technical Specification Group Services and System Aspects; Policy and charging control architecture (Release 12)" and "3GPP TS 29.215 V12.3.0 (2014-03) Technical Specification Group Core Network and Terminals; Policy and charging control over S9 reference point (Release 12)" disclose the overall PCC architecture for roaming with PCEF in visited network when SPR is used.

### Summary of the Invention

An embodiment of the present invention provides a method according to claim 1 for application detection and control in a roaming scenario and V-PCRF according to claim 9 to guarantee the QoS of detected services in a roaming scenario. Further improvements and embodiments are provided in the dependent claims.

Also provided is a method for application detection and control in a roaming scenario, which comprises:
a visited policy control and charging rules function V-PCRF receiving application information of a detected application reported by a traffic detection function TDF;
creating a second PCC rule according to the application information and a first PCC rule that is provisioned by a home policy control and charging function H-PCRF for detecting the application;
sending the second PCC rule to a PCEF.

Alternatively, the application information includes: an application identifier and corresponding flow description information; the first policy and charging control PCC rule includes the application identifier and corresponding Quality of Service QoS information, and the second PCC rule includes the flow description information and the QoS information.

Alternatively, if service data flow description of the application is deducible, the flow description information is service data flow description, and a service data flow filter in the second PCC rule is set according to the service data flow description. If service data flow description of the application is not deducible, the flow description information is encapsulation flow description, and the service data flow filter in the second PCC rule is set according to the encapsulation flow description.

Alternatively, the encapsulation flow description is a specific differentiated service code point DSCP tag that is marked in an IPv4 packet header of a packet of the application or a specific flow label that is marked in an IPv6 packet header of the application; or is packet header information for performing user datagram protocol UDP encapsulation outside the packet of the application.

Alternatively, the method further comprises:
the TDF performing a packet encapsulation on packets of the detected application with the encapsulation flow description;
the PCEF performing a policy enforcement on packets of the application with the second PCC rule and deleting the encapsulation flow description.

Alternatively, before the V-PCRF receives the application information of the detected application reported by the TDF, the method further comprises:
after the V-PCRF receives the first PCC rule provisioned by the H-PCRF, according to the following rules the V-PCRF creating an detection and control of the application ADC rule used for detecting application and provisioning the created ADC rule to the TDF:
the V-PCRF setting a value of ADC rule name attribute value pair AVP in the ADC rule;
if TDF-Application-Identifier AVP, Flow-Status AVP, Precedence AVP, Max-Requested-Bandwidth-UL AVP, Max-Requested-Bandwidth-DL AVP, Monitoring-Key AVP, Redirect-Information AVP, Service-Identifier AVP, Rating-Group AVP, Reporting-Level AVP, Online AVP, Offline AVP or Metering-Method AVP are included in the first PCC rule, the V-PCRF setting the values of the corresponding TDF-Application-Identifier AVP, Flow-Status AVP, Precedence AVP, Max-Requested-Bandwidth-UL AVP, Max-Requested-Bandwidth-DL AVP, Monitoring-Key AVP, Redirect-Information AVP, Service-Identifier AVP, Rating-Group AVP, Reporting-Level AVP, Online AVP, Offline AVP or Metering-Method AVP in the ADC rule according to the values of the TDF-Application-Identifier AVP, the Flow-Status AVP, the Precedence AVP, the Max-Requested-Bandwidth-UL AVP, the Max-Requested-Bandwidth-DL AVP, the Monitoring-Key AVP, the Redirect-information AVP, the Service-Identifier AVP, the Rating-Group AVP, the Reporting-Level AVP, the Online AVP, the Offline AVP or Metering-Method AVP in the first PCC rule.

Alternatively, the V-PCRF creates the second PCC rule according to the following rules:
the V-PCRF setting a value of charging rule name AVP in the second PCC rule;
the V-PCRF setting the values of corresponding QoS information AVP, flow status and precedence AVP in the second PCC rule according to the values of the quality of service QoS information AVP, flow status and precedence AVP in the first PCC rule;
if Service-Identifier AVP, Rating-Group AVP, Reporting-Level AVP, Online AVP, Offline AVP and Metering-Method AVP are included in the first PCC rule provisioned by the H-PCRF, and the TDF does not support an application-based charging, then the V-PCRF setting the values of the corresponding service identifier AVP, rating group AVP, reporting level AVP, online AVP, offline AVP and metering method AVP in the second PCC rule according to the values of the service identifier AVP, the rating group AVP, the reporting level AVP, the online AVP, the offline AVP and metering method AVP in the first PCC rule;
the V-PCRF setting a value of Flow-Information AVP of the second PCC rule according to the value of the Flow-Information AVP that is reported by the TDF.
Alternatively, the application information includes an application identifier and an APPLICATION_STOP event trigger;
the method further comprises:
   the V-PCRF sending an instruction of deleting the second PCC rule that is installed in the PCEF to the PCEF.

Alternatively, the method further comprises:
the V-PCRF creating a quality of service QoS rule according to the second PCC rule and sending the QoS rule to a Bearer Binding and Event Reporting Function BBERF.

Alternatively, the application information includes an application identifier and an APPLICATION_STOP event trigger;
the method further comprises:
the V-PCRF sending an instruction of deleting the QoS rule that is installed by the BBERF to the BBERF.

Also provided is a visited policy control and charging rules function V-PCRF, which comprises:
a receiving module, configured to receive application information of a detected application reported by a traffic detection function TDF;
a decision module, configured to establish a second PCC rule according to the application information and a first policy and charging control PCC rule that is provisioned by a home policy control and charging rule function H-PCRF for detecting the application;
a sending module, configured to send the second PCC rule to a policy and charging enforcement function PCEF.

Alternatively, the application information includes: an application identifier and corresponding flow description information; the first PCC rule includes the application identifier and corresponding Quality of Service QoS information, the second PCC rule includes the flow description information and the QoS information.

Alternatively, if service data flow description of the application is deducible, flow description information is the service data flow description, and a service data flow filter in the second PCC rule is set according to the service data flow description;
if service data flow description of the application is not deducible, the flow description information is encapsulation flow description, and a service data flow filter in the second PCC rule is set according to the encapsulation flow description.

Alternatively, the encapsulation flow description is a specific differentiated service code point DSCP tag that is marked in an IPv4 packet header of a packet of the application or a specific flow label that is marked in an IPv6 packet header of the application; or is header information for performing user datagram protocol UDP encapsulation outside a packet of the application.

Alternatively, the application information includes an application identifier and an APPLICATION_STOP event trigger;
The decision module is further configured to make an instruction of deleting the second PCC rule that is installed in the PCEF;
The sending module is further configured to send an instruction of deleting the second PCC rule that is installed in the PCEF to the PCEF.

Alternatively, the decision module is further configured to establish a quality of service QoS rule according to the second PCC rule;
The sending module is further configured to send the QoS rule to a Bearer Binding and Event Reporting Function BBERF.

Alternatively, the application information includes an application identifier and an APPLICATION_STOP event trigger;
The decision module is further configured to make an instruction of deleting the QoS rule that is installed in the BBERF;
The sending module is further configured to send an instruction of deleting the QoS rule that is installed by the BBERF to the BBERF.

Also provided is a computer program including computer instructions, which, when executed by a V-PCRF, enable the V-PCRF to perform the method described above.

Also provided is a carrier that carries the computer program.

In the method for application detection and control in a roaming scenario and V-PCRF provided by the embodiment of the present invention, after a TDF detects the starting of an application, the TDF interacts with a V-PCRF, and the V-PCRF creates a PCC rule which includes the QoS information, thereby overcoming the problem that since the TDF does not support a bearer binding function, as a result the QoS of the service detected by the ADC rule cannot be guaranteed, and achieving the function that the QoS of the detected service in a roaming scenario is guaranteed.

### Brief Description of Drawings

FIG.1 is a schematic diagram of a non-roaming PCC architecture in the related art;
FIG.2 is a schematic diagram of a Visited Access PCC architecture in a roaming scenario in the related art;
FIG.3 is a flow chart of a method for application detection and control in a roaming scenario in an embodiment;
FIG.4 is a flow chart in which the H-PCRF provides the PCC rule to the V-PCRF during an IP-CAN session establishment procedure in the related art;
FIG.5 is a flow chart in which the H-PCRF provides the PCC rule to the V-PCRF during an IP-CAN session modification procedure in the related art;
FIG.6 is a flow chart in which the V-PCRF provides the PCC rule to the PCEF based on application information reported by a TDF in an embodiment;
FIG.7 is a flow chart in which the V-PCRF provides the PCC rule to the PCEF based on application information reported by a TDF in an embodiment;
FIG.8 is a flow chart in which the V-PCRF deletes the PCC rule based on application information reported by a TDF in an embodiment;
FIG.9 is a V-PCRF structural diagram for application detection and control in a roaming scenario in an embodiment.

### Preferred Embodiments of the Invention

An embodiment of the present invention will be described in details below in conjunction with the accompanying drawings. It should be noted that the embodiments in the present application and the features in the embodiments can be in any combination with each other without conflicts.

### Embodiment:

As shown in FIG.3, the present embodiment provides a method for application detection and control in a roaming scenario, comprising the following steps:
in S301, a V-PCRF receives application information of a detected application reported by a TDF;
in S302, a second PCC rule is created according to the application information and a first PCC rule that is provisioned by a home policy control and charging rule function H-PCRF for detecting the application;
in S303, the second PCC rule is sent to a policy and charging enforcement function PCEF.

Wherein the application information may include: an application identifier and corresponding flow description information; the first PCC rule includes the application identifier and corresponding Quality of Service QoS information, the second PCC rule includes the flow description information and the QoS information.

Wherein, the QoS information is the QoS information that is included in the first PCC rule and is provisioned by the H-PCRF.

Wherein, as an alternative mode, if service data flow description of the application is deducible, the flow description information is service data flow description, and a service data flow filter in the second PCC rule is set according to the service data flow description;
wherein, as another alternative mode, if service data flow description of the application is not deducible, the flow description information is encapsulation flow description, and the service data flow filter in the second PCC rule is set according to the encapsulation flow description.

The encapsulation flow description is a specific differentiated service code point DSCP tag that is marked in an IPv4 packet header of a packet of the application or a specific flow label that is marked in an IPv6 packet header of the application; or is packet header information by performing user datagram protocol UDP encapsulation outside a packet of the application.

Furthermore, the method further comprises:
the TDF performs a packet encapsulation on packets of the above detected application using the encapsulation flow description information;
after the PCEF installs the PCC rule, the PCEF performs a policy enforcement on the packets of the above application using the second PCC rule and deletes the encapsulation flow description information.

Or in the step S301, the application information may further include: an application identifier and an APPLICATION_STOP event trigger;
after above steps, the method further comprises: the V-PCRF decides to delete the second PCC rule that is installed in the PCEF.

Furthermore, after the step S302, the method further comprises: the V-PCRF creates a quality of service QoS rule according to the second PCC rule and sends the QoS rule to a Bearer Binding and Event Reporting Function BBERF.

If the application information includes: an application identifier and an APPLICATION_STOP event trigger;
the method further comprises:
the V-PCRF sends an instruction of deleting the QoS rule that is installed in the BBERF to the BBERF.

In order to solve the problem of application detection and control in a roaming scenario, the present embodiment is described below in further detail in connection with the accompanying drawings.

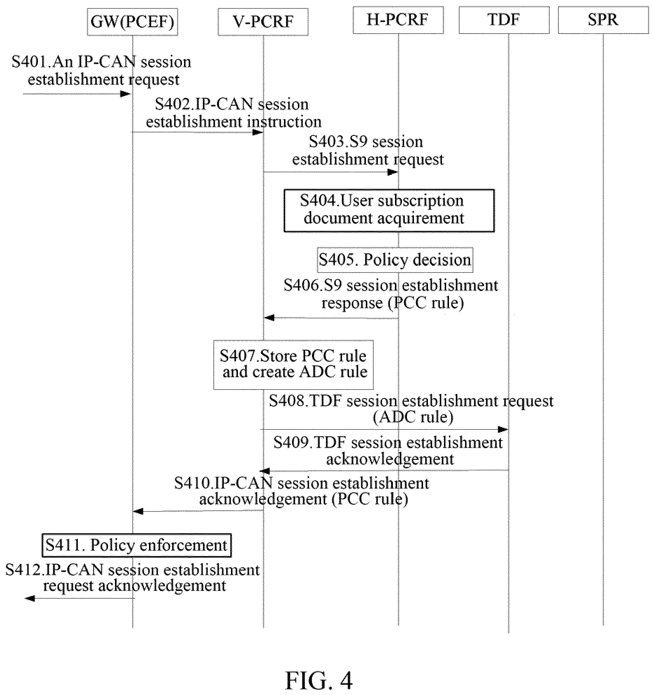

FIG.4 is a flow in which the H-PCRF provides the PCC rule including an application identifier to the V-PCRF during an IP-CAN session establishment procedure in the related art. In this flow, the V-PCRF saves the received PCC rule and possible event triggers, and V-PCRF creates an ADC rule according to the PCC rule including the application identifier, the present embodiment innovatively presents a way of creating the ADC rule by the V-PCRF.

The flow includes the following steps:
In Step S401, the gateway where the PCEF is located receives a request message for establishing an IP-CAN (IP-Connectivity Access Network) session, and the message carries information, such as a user identifier, PDN (Packet Data Network) identifier and so on.

In Step S402, the PCEF sends an IP-CAN session establishment indication message to the V-PCRF, and the message carries a user identifier, PDN identifier and an IP address that the gateway allocates to a UE.

In Step S403, the V-PCEF sends an S9 session establishment request message to the H-PCRF, and the message carries an user identifier, PDN identifier and an IP address that the gateway allocates to a UE;

In Step S404, the H-PCRF interacts with an SPR to acquire a user subscription document;

In Step S405, the H-PCRF makes a decision and creates the PCC rules. The created PCC rules includes PCC rules including an application identifier (the application identifier is carried by a TDF application identifier AVP) and PCC rules including a service data flow filter (SDF filter for short, the SDF filter is carried by a flow information AVP). The two kinds of PCC rules contain QoS parameters (QCI(QoS Class Identifier), ARP(Allocation and Retention Priority)), for GBR QCI (Guaranteed Bit Rate, QoS Class Identifier), the PCC rules further include QoS parameters (GBR, MBR (Maximum Bit Rate)). The H-PCRF might further provide event triggers of APPLICATION_START/ APPLICATION_STOP to the V-PCRF. If the H-PCRF provides the values of above two event triggers, the PCC rule including the application identifier might further carry a Mute Notification.

In Step S406, the H-PCRF returns an S9 session establishment acknowledgement message to the V-PCRF, and the message carries the PCC rule that is created in the step S405.

In Step S407, the V-PCRF stores the received PCC rule and possible event triggers. The V-PCRF creates an ADC rule according to the PCC rule that includes the application identifier. The V-PCRF creates the ADC rule as follows:
1) the V-PCRF sets a value of ADC-Rule-Name Attribute Value Pair (AVP) in the ADC rule, and the correspondence for the PCC rule name and the ADC-Rule-Name is maintained by the V-PCRF;
2) the V-PCRF sets values of the corresponding AVP in the ADC rule according to the values of the TDF-Application-Identifier AVP, Flow-Status AVP and Precedence AVP in the PCC rule;
3) if the PCC rule includes Monitoring-Key AVP and Redirect-Information AVP, the V-PCRF sets the values of the corresponding AVP in the ADC rule according to the values of the above AVP in the PCC rule;
4) if the PCC rule includes Service-identifier AVP, Rating-Group AVP, Reporting-Level AVP, Online AVP, Offline AVP and Metering-Method AVP and the TDF supports an Application-based Charging, then the V-PCRF sets the values of the corresponding AVP in the ADC rule according to the values of the above AVP in the PCC rule;
5) if the value of quality of service QoS-information QoS-Class-Identifier AVP in the QoS-information AVP in the PCC rule is GBR QCI (Guaranteed Bit Rate, QoS Class Identifier), then the V-PCRF sets the values of the corresponding AVP in the ADC rule according to the values of the Max-Requested-Bandwidth-UL and Max-Requested-Bandwidth-DL of the QoS information in the PCC rule;
   For 2)-5), it can be understood that if the PCC rule includes a certain AVP, the V-PCRF also includes the corresponding AVP in the ADC rule and sets the corresponding values.
6) no matter whether the PCC rule includes a Mute-Notification AVP, the ADC rule does not carry the Mute-Notification.

In Step S408, the V-PCRF sends a TDF session establishment request message to the TDF. No matter whether the H-PCRF provides event triggers carrying a value of APPLICATION_START/APPLICATION_STOP to the V-PCRF, the V-PCRF carries event triggers that have a value of APPLICATION_START/APPLICATION_STOP in the message. The V-PCRF carries the ADC rule that is created in step 307 in the message.

In Step S409, the TDF installs/activates the ADC rule and returns an acknowledgement message after installing the event trigger.

In Step S410, the V-PCRF returns an IP-CAN session acknowledgement message to the PCEF, in the message, a PCC rule including an SDF filter provided by the H-PCRF is carried.

In Step S411, the PCEF enforces a policy and installs/activates the PCC rule.

In Step S412, the PCEF returns an acknowledgement message of requesting an IP-CAN session establishment, which carries an IP address of a UE.

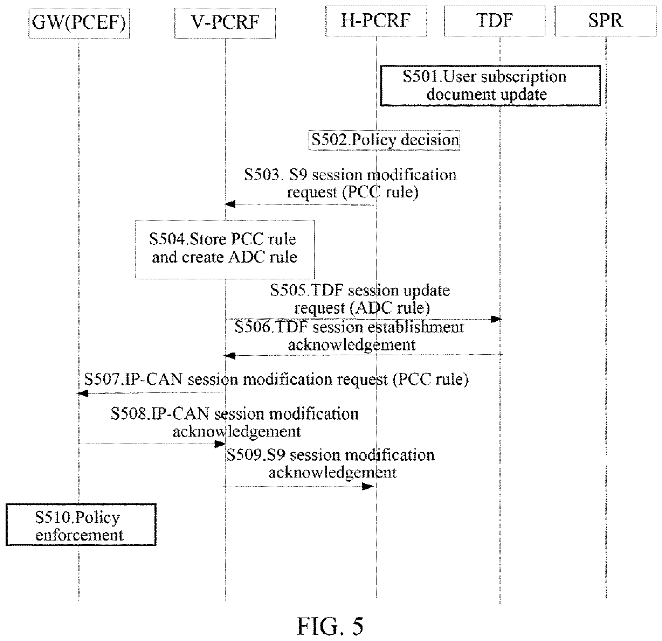

FIG.5 is a flow in which the H-PCRF provides a PCC rule that includes an application identifier to the V-PCRF during the H-PCRF policy update procedure in the related art. In this flow, the V-PCRF stores the received PCC rule. The V-PCRF creates an ADC rule according to the PCC rule including an application identifier, the present embodiment innovatively presents specific rules of creating the ADC rule by the V-PCRF.

The flow mainly includes the following steps:
In step S501, the SPR interacts with the H-PCRF to update the user subscription document;
this step is alternative.

In step S502, the H-PCRF updates the PCC rule according to the updated user subscription in step S501, or the updated network policy updated by the H-PCRF. The PCC rules may be PCC rules that include an application identifier and/or PCC rules that include a service data flow (SDF) filter. The two types of PCC rules contain QoS parameters (QCI, ARP), and for GBR QCI, the PCC rule also includes QoS parameters (GBR, MBR).

In step S503, the H-PCRF sends an S9 session update request message to the V-PCRF, and the message carries the updated PCC rule; if the H-PCRF did not provide event triggers that carry the values of APPLICATION_START and APPLICATION_STOP to the V-PCRF previously, the H-PCRF might further carry the event triggers of the values of APPLICATION_START and APPLICATION_STOP in the message. If the H-PCRF provides the above event triggers of the two values, the PCC rule that includes an application identifier might further carry a Mute Notification.

In step S504, the V-PCRF stores the received PCC rule. The V-PCRF creates an ADC rule according to the PCC rule that includes an application identifier. The V-PCRF creates the ADC rule as follows:
1) the V-PCRF sets a value of ADC-Rule-Name AVP in the ADC rule, and the correspondence between the PCC rule name and the ADC-Rule-Name is maintained by the V-PCRF;
2) the V-PCRF sets the values of the corresponding AVP in the ADC rule according to the values of the TDF-Application-Identifier AVP, Flow-Status AVP and Precedence AVP in the PCC rule;
3) if the PCC rule includes Monitoring-Key AVP and Redirect-Information AVP, the V-PCRF sets the values of the corresponding AVP in the ADC rule according to the values of the above AVP in the PCC rule;
4) if the PCC rule includes Service-identifier AVP, Rating-Group AVP, Reporting-Level AVP, Online AVP, Offline AVP and Metering-Method AVP and the TDF supports an Application-based Charging, then the V-PCRF sets the values of the corresponding AVP in the ADC rule according to the values of the above AVP in the PCC rule;
5) if the value of QoS-Class-Identifier AVP in the QoS-information AVP in the PCC rule is GBR QCI, then the V-PCRF sets the values of the corresponding AVP in the ADC rule according to the values of the Max-Requested-Bandwidth-UL and Max-Requested-Bandwidth-DL of the QoS-information in the PCC rule;
   For 2)-5), it can be understood that if the PCC rule includes a certain AVP, the V-PCRF also includes the corresponding AVP in the ADC rule and sets the corresponding values.
6) no matter whether the PCC rule includes Mute-Notification AVP, the ADC rule does not carry the Mute-Notification.

In step S505, if the TDF session that corresponds to the IP-CAN session is not established, the V-PCRF sends a TDF session establishment request message to the TDF, and the message carries the ADC rule and the APPLICATION_START/APPLICATION_STOP event trigger; if the TDF session that corresponds to the IP-CAN session has been established, the V-PCRF sends a IP-CAN session modification request message to the TDF, and the message carries the ADC rule.

In step S506, the TDF installs/activates the ADC rule and returns the acknowledgement message after installing the event trigger (if updated).

In step S507, if the H-PCRF provides a PCC rule that includes a service data flow filter to the V-PCRF, the V-PCRF sends an IP-CAN session modification message to the PCEF, and the message carries the PCC rule carrying the service data flow filter that is provided by the H-PCRF.

In step S508, the acknowledgement message is returned to the V-PCRF after the PCEF installs/activates the PCC rule.

In step S509, the V-PCRF returns an S9 session modification acknowledgement message to the H-PCRF.

In step S510, the PCEF enforces the policy, including initiating a bearer operation to reserve resources.

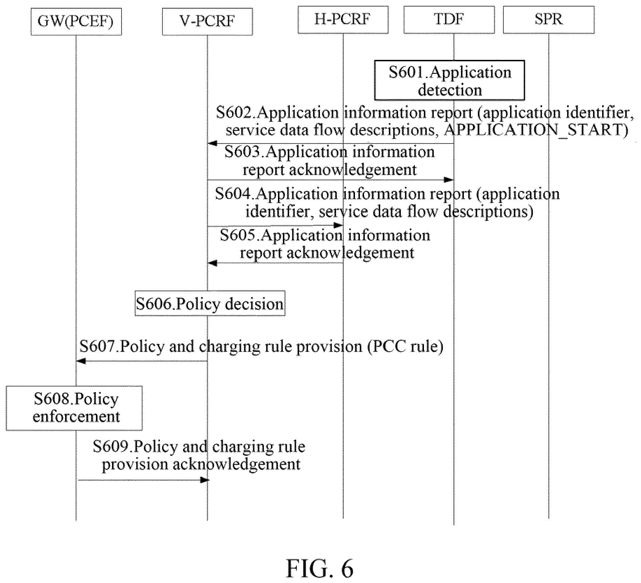

FIG.6 is a flow in which once the TDF detected the application, TDF interacts with the V-PCRF and creates the PCC rule. Wherein the service data flow descriptions of an application is deducible. As shown in FIG.6, the flow mainly includes the following steps:
In step S601, the TDF performs application detection according to the ADC rule which is provisioned by the V-PCRF in FIG.4 or FIG.5.

In Step S602, the TDF reports the application information of the detected application to the V-PCRF, and the message carries an application identifier and the corresponding service data flow description as well as an APPLICATION_START event trigger;
the specific implementation is that the TDF carries the detected application information using an Application-Detection-Information AVP, and the TDF-Application-Identifier AVP in that AVP carries the detected application identifier; the Flow-Information AVP carries service data flow descriptions. Since the application is deducible, the derived service data flow description is 5-tuple information of an IP packet header of a packet of the application;

In step S603, the V-PCRF returns an acknowledgement message to the TDF after saving the reported application information;

In step S604, the V-PCRF determines the PCC rule provisioned by the corresponding H-PCRF according to the value of the TDF-Application-Identifier, if the H-PCRF has subscribed the APPLICATION_START/APPLICATION_STOP and detected that the PCC rule of the application did not carry the Mute Notification in FIG.4 or FIG.5, the V-PCRF reports the application information to the H-PCRF, and the message carries an application identifier and service data flow descriptions as well as the APPLICATION_START event trigger;
the specific implementation is that the V-PCRF carries the detected application information using Application-Detection-Information AVP, and the TDF-Application-Identifier AVP in the AVP carries the detected application identifier; the Flow-Information AVP carries service data flow descriptions.

In Step S605, the H-PCRF returns an acknowledgement message;
In Step S606, the V-PCRF makes a policy decision and creates a PCC rule that carries a service data flow filter; the service data flow filter of the PCC rule is generated according to the service data flow descriptions, QoS information, charging information and so on are generated according to the QoS information, charging information in the PCC rule that corresponds to the reported application identifier which is stored as shown in FIG.4 or FIG.5; The V-PCRF creates a new PCC rule as follows:
1) the V-PCRF sets a value of Charging-Rule-Name AVP in the new PCC rule, and the V-PCRF is required to maintain the correspondence for the PCC rule provisioned by the H-PCRF, the new PCC rule and the ADC rule;
2) the V-PCRF sets the values of the corresponding AVP in the new PCC rule according to the values of the QoS-Information AVP, Flow-Status AVP and Precedence AVP in the PCC rule provisioned by the H-PCRF;
3) if the PCC rule provisioned by the H-PCRF includes Service-identifier AVP, Rating-Group AVP, Reporting-Level AVP, Online AVP, Offline AVP and Metering-Method AVP and the TDF does not support an Application-based Charging, then the V-PCRF sets the values of the corresponding AVP in the new PCC rule according to the values of the above AVP in the PCC rule provisioned by the H-PCRF;
4) a value of the Flow-Information AVP in the new PCC rule is set according to the value of the Flow-Information AVP reported by the TDF.

In step S607, the V-PCRF sends a policy and charging rule provision message to the PCEF, and the message carries the PCC rule created in the step S606.

In step S608, the PCEF installs the PCC rule. The PCEF might initiate a bearer creation or a modification process in order to reserve the corresponding resources.

In step S609, the PCEF returns an acknowledgement message to the V-PCRF.

Thereafter, after the application-related service data flow arrives at the PCEF, the PCEF matches the service data flow to the corresponding bearer according to the installed PCC rule, thereby achieving the QoS guarantee.

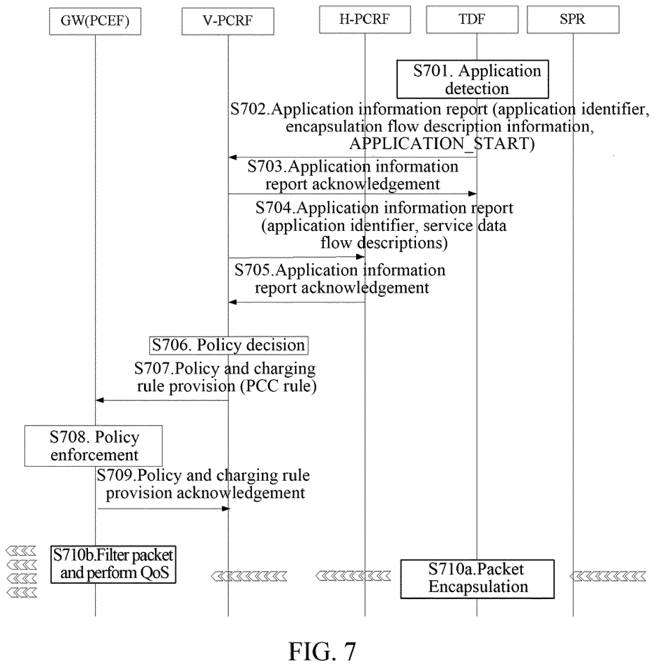

FIG.7 is a flow chart in which once the TDF detected the application, the TDF interacts with the V-PCRF and creates the PCC rule. Wherein the service data flow descriptions of an application is not deducible. As shown in FIG.7, the flow mainly includes the following steps:
In step S701, the TDF performs application detection according to the ADC rule provisioned in FIG.4 or FIG.5.

In step S702, the TDF reports the detected application information to the V-PCRF, and the message carries an application identifier and encapsulation flow descriptions as well as an APPLICATION_START event trigger.

Wherein the encapsulation description information is the information for the TDF to prepare for identifying the application data, the encapsulation flow descriptions may have the main two types of implementation as follows: (1) a specific differentiated service code point (DSCP) tag is marked in an application packet header in the original IPv4, or a specific flow label is marked in an application packet header in the original IPv6, at this time, the encapsulation flow description information is a DSCP tag or a flow label; (2) the user data protocol (UDP for short) encapsulation is performed outside the application packet, and the application data are identified using a specific UDP port number, at this time, the encapsulation flow description is the header information of an external encapsulation;
The specific implementation is that the TDF carries the detected application information using an Application-Detection-Information AVP, and the TDF-Application-Identifier AVP in the AVP carries the detected application identifier; the Flow-Information AVP carries the encapsulation data flow descriptions.

In step S703, the V-PCRF returns an acknowledgement message to the TDF after saving the reported application information.

In step S704, the V-PCRF determines the PCC rule provisioned by the corresponding H-PCRF according to the value of the TDF-Application-Identifier, if the H-PCRF has subscribed the APPLICATION_START/APPLICATION_STOP and detected that the PCC rule of the application did not carry the Mute Notification in FIG.4 or FIG.5, the V-PCRF reports the application information to the H-PCRF, and the message carries an application identifier and the APPLICATION_START event trigger;
the specific implementation is that the V-PCRF carries the detected application information using Application-Detection-Information AVP, and the TDF-Application-Identifier AVP in the AVP carries the detected application identifier; the Flow-Information AVP carries encapsulation data flow descriptions.

In step S705, the H-PCRF returns an acknowledgement message.

In step S706, the V-PCRF makes a policy decision and creates a PCC rule that includes a service data flow filter, the service data flow filter of the PCC rule is generated according to the encapsulation flow descriptions, QoS information, charging information and so on are generated according to the QoS information in the PCC rule that corresponds to the reported application identifier which is saved in FIG.4 or FIG.5.

The V-PCRF creates a new PCC rules as follows:
1) the V-PCRF sets a value of Charging-Rule-Name AVP in the new PCC rule, and the V-PCRF is required to maintain the correspondence for the PCC rule provisioned by the H-PCRF, the new PCC rule and the ADC rule;
2) the V-PCRF sets the values of the corresponding AVP in the new PCC rule according to the values of the QoS-Information AVP, Flow-Status AVP and Precedence AVP in the PCC rule provisioned by the H-PCRF;
3) if the PCC rule provisioned by the H-PCRF includes Service-identifier AVP, Rating-Group AVP, Reporting-Level AVP, Online AVP, Offline AVP and Metering-Method AVP and the TDF does not support an Application-based Charging, then the V-PCRF sets the values of the corresponding AVP in the new PCC rule according to the values of the above AVP in the PCC rule provisioned by the H-PCRF;
4) a value of the Flow-Information AVP in the new PCC rule is set according to the value of the Flow-Information AVP reported by the TDF.

In step S707, the V-PCRF sends a policy and charging rule provision message to the PCEF, the message carries the PCC rule created by the step S606.

In step S708, the PCEF installs the PCC rule;

the PCEF might initiate a bearer creation or a modification process in order to reserve the corresponding resources.

In step S709, the PCEF returns an acknowledgement message to the V-PCRF.

In step S710a, the TDF operates the detected application packet using the encapsulation flow descriptions.

In step S710b, after the application packet arrives at the PCEF, the PCEF performs the policy enforcement after matching the application packet using the PCC rule provisioned in step S707, and then deletes the encapsulation flow descriptions.

The application scenario in FIG.6, FIG.7 is the scenario in which the BBERF does not exist, for the scenario that the BBERF exists, after the V-PCRF created a PCC rule that includes a service data flow filter, the V-PCRF also creates a quality of service QoS rule according to the PCC rule and provides the QoS rule to the BBERF, and after the BBERF installed the rule, the BBERF might initiate a bearer creation or a modification process in order to reserve the corresponding resources.

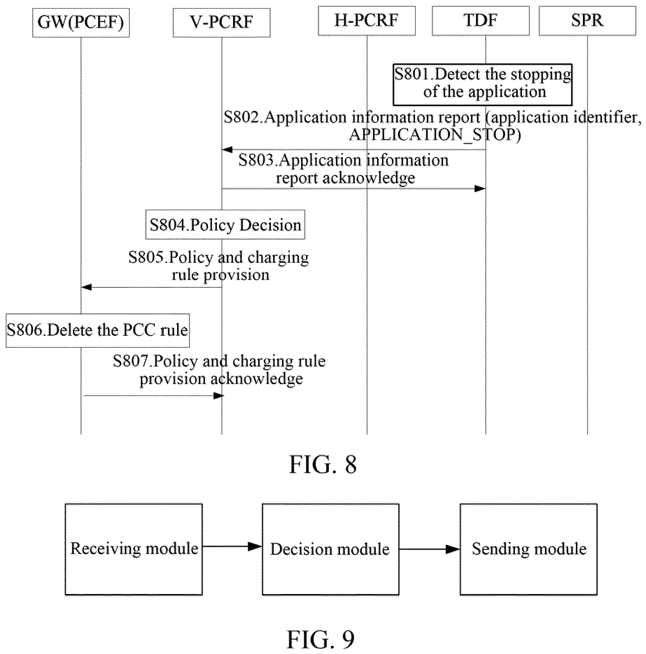

FIG.8 is a flow chart in which after the TDF detects that the application detected in FIG.6 or FIG.7 ends, the TDF interacts with the V-PCRF and deletes the PCC rule. As shown in FIG.8, the flow mainly includes the following steps:
In step S801, the TDF detects the stopping of the application in FIG.6 or FIG.7.

In step S802, the TDF reports the detected application information to the V-PCRF, and the message carries an application identifier and an APPLICATION_STOP event trigger.

In step S803, the V-PCRF returns an acknowledgement message to the TDF after saving the reported application information.

In step S804, the V-PCRF determines the PCC rule created in FIG.6, FIG.7 according to the TDF-Application-Identifier AVP, and the V-PCRF makes a policy decision and decides to delete the PCC rule that corresponds to the application identifier installed in the PCEF in FIG.6 or FIG.7.

In step S805, the V-PCRF sends a policy and charging rule provision message to the PCEF and requests to delete the PCC rule.

In step S806, the PCEF deletes the PCC rule. The PCEF might initiate a bearer creation or a modification process in order to release the corresponding resources.

In step S807, the PCEF returns an acknowledgement message to the V-PCRF.

The application scenario in FIG.6, FIG.7 is the scenario in which the BBERF does not exist, for the scenario that the BBERF exists, after the V-PCRF deletes a PCC rule that includes a service data flow filter, the V-PCRF also instructs the BBERF to delete the corresponding QoS rule. The BBERF might initiate a bearer creation or a modification process in order to release the corresponding resources

As shown in FIG.9, the embodiment provides a V-PCRF for application detection and control in a roaming scenario, and the V-PCRF comprises:
a receiving module, configured to receive application information of a detected application reported by a TDF;
a policy establishment module, configured to create a second PCC rule according to the application information and a first PCC rule that is provisioned by an H-PCRF for detecting the application;
a sending module, configured to send the second PCC rule to a policy and charging enforcement function PCEF.

The application information may include: an application identifier and corresponding flow description information; the first PCC rule includes the application identifier and corresponding Quality of Service QoS information, the second PCC rule includes the flow description information and the QoS information.

As an alternative way, if service data flow description of the application is deducible, the flow description information is service data flow descriptions, and the service data flow filter in the second PCC rule is set according to the service data flow descriptions;

As another alternative way, if service data flow description of the application is not deducible, the flow description information is encapsulation flow description, and the service data flow filter in the second PCC rule is set according to the encapsulation flow description.

Wherein the encapsulation flow description is a specific differentiated service code point DSCP tag that is marked in an IPv4 packet header of a packet of the application or a specific flow label that is marked by an IPv6 packet header of the application; or is packet header information by performing user datagram protocol UDP encapsulation outside a packet of the application.

The application information may further include an application identifier and an APPLICATION_STOP event trigger;
the decision module is further configured to make an instruction of deleting the second PCC rule that is installed in the PCEF;
the sending module is further configured to send an instruction of deleting the second PCC rule that is installed in the PCEF to the PCEF.

Furthermore, the decision module is further configured to create a quality of service QoS rule according to the second PCC rule;
the sending module is further configured to send the QoS rule to a Bearer Binding and Event Reporting Function BBERF.

If the application information includes an application identifier and an APPLICATION_STOP event trigger;
the decision module is further configured to make an instruction of deleting the QoS rule that is installed in the BBERF;
the sending module is further configured to send an instruction of deleting the QoS rule that is installed in the BBERF to the BBERF.

It can be seen from the above embodiments that the method for application detection and control in a roaming scenario and V-PCRF are provided in the above embodiments, after the TDF detects the starting of the application, it interacts with the V-PCRF, and the V-PCRF creates a PCC rule which includes the QoS information, thereby overcoming the problem that the QoS of the service detected by the ADC rule cannot be guaranteed since the TDF does not support a bearer binding function, and achieving the function that the QoS of the detected service in a roaming scenario is guaranteed.

Those skilled in the art can understand that all or parts of steps of the above-mentioned methods can be implemented by a program instructing relevant hardware, the program can be stored in a computer readable storage medium, such as read-only memory, magnetic disk or optical disk, etc. Alternatively, all or parts of steps of the above-mentioned embodiments can also be implemented using one or more integrated circuits. Accordingly, various modules/units in the above-mentioned embodiments can be implemented in the form of hardware and can also be implemented in the form of software function modules. The present invention is not limited to the combination of hardware and software in any particular form.

The above description is only the preferred embodiments of the present invention and is not used to limit the protection scope of the present invention. According to the contents of the present invention, it can also have a plurality of other embodiments, those skilled in the art can make various corresponding changes and variations.

### Industrial Applicability

The embodiment of the present overcomes the problem that the QoS of the service detected by the ADC rule cannot be guaranteed since the TDF does not support a bearer binding function, and achieves the function that the QoS of the detected service is guaranteed in a roaming scenario.

## Claims

1. A method for application detection and control in a roaming scenario, **characterized by** comprising:
a visited policy control and charging rules function, V-PCRF, receiving application information of a detected application reported by a traffic detection function, TDF, (S301);
the V-PCRF creating a second policy and charging control, PCC, rule according to the application information and a first PCC rule that is provisioned by a home policy control and charging function, H-PCRF, for detecting the application (S302);
the V-PCRF sending the second PCC rule to a policy and charging enforcement function, PCEF, (S303);
wherein:
the application information comprises an application identifier and corresponding flow description information; the first PCC rule includes the application identifier and corresponding Quality of Service, QoS, information, and the second PCC rule includes the flow description information and the QoS information;
wherein if service data flow description of the application is deducible, the flow description information is service data flow description, and the V-PCRF sets a service data flow filter in the second PCC rule according to the service data flow description.

2. The method according to claim 1, wherein:
if service data flow description of the application is not deducible, the flow description information is encapsulation flow description, and the V-PCRF sets the service data flow filter in the second PCC rule according to the encapsulation flow description.

3. The method according to claim 2, wherein:
the encapsulation flow description is a specific differentiated service code point, DSCP, tag that is marked in an IPv4 packet header of a packet of the application, or a specific flow label that is marked in an IPv6 packet header of the application; or is packet header information by performing user datagram protocol UDP encapsulation outside the packet of the application.

4. The method according to claim 2 or 3, the method further comprises:
the TDF performing a packet encapsulation on packets of the detected application with the encapsulation flow description;
the PCEF performing a policy enforcement on packets of the application with the second PCC rule and deleting the encapsulation flow description.

5. The method according to claim 1, wherein:
before the V-PCRF receives the application information of the detected application reported by the TDF, the method further comprises:
after the V-PCRF receives the first PCC rule provisioned by the H-PCRF, the V-PCRF creating an application detection and control, ADC, rule for detecting the application according to the following rules and provisioning the created ADC rule to the TDF:
the V-PCRF setting a value of ADC rule name attribute value pair, AVP, in the ADC rule;
if TDF-Application-Identifier AVP, Flow-Status AVP, Precedence AVP, Max-Requested-Bandwidth-UL AVP, Max-Requested-Bandwidth-DL AVP, Monitoring-Key AVP, Redirect-Information AVP, Service-Identifier AVP, Rating-Group AVP, Reporting-Level AVP, Online AVP, Offline AVP or Metering-Method AVP are included in the first PCC rule, the V-PCRF setting values of the corresponding TDF-Application-Identifier AVP, Flow-Status AVP, Precedence AVP, Max-Requested-Bandwidth-UL AVP, Max-Requested-Bandwidth-DL AVP, Monitoring-Key AVP, Redirect-Information AVP, Service-Identifier AVP, Rating-Group AVP, Reporting-Level AVP, Online AVP, Offline AVP or Metering-Method AVP in the ADC rule according to values of the TDF-Application-Identifier AVP, the Flow-Status AVP, the Precedence AVP, the Max-Requested-Bandwidth-UL AVP, the Max-Requested-Bandwidth-DL AVP, the Monitoring-Key AVP, the Redirect-Information AVP, the Service-Identifier AVP, the Rating-Group AVP, the Reporting-Level AVP, the Online AVP, the Offline AVP or Metering-Method AVP in the first PCC rule.

6. The method according to claim 1 or 2, wherein:
the V-PCRF creates the second PCC rule according to the following rules:
the V-PCRF setting a value of charging rule name AVP in the second PCC rule;
the V-PCRF setting values of corresponding QoS-information AVP, Flow-Status AVP and Precedence AVP in the second PCC rule according to values of the quality of service QoS-information AVP, Flow-Status AVP and Precedence AVP in the first PCC rule;
if Service-Identifier AVP, Rating-Group AVP, Reporting-Level AVP, Online AVP, Offline AVP and Metering-Method AVP are included in the first PCC rule provisioned by the H-PCRF, and the TDF does not support an Application-based Charging, then the V-PCRF setting values of the corresponding Service-Identifier AVP, Rating-Group AVP, Reporting-Level AVP, Online AVP, Offline AVP and Metering-Method AVP in the second PCC rule according to values of the Service-Identifier AVP, the Rating-Group AVP, the Reporting-Level AVP, the Online AVP, the Offline AVP and Metering-Method AVP in the first PCC rule;
the V-PCRF setting a value of Flow-Information AVP in the second PCC rule according to the value of the Flow-Information AVP that is reported by the TDF.

7. The method according to claim 1, wherein:
the application information comprises an application identifier and an APPLICATION_STOP event trigger;
the method further comprises:
the V-PCRF sending an instruction of deleting the second PCC rule that is installed in the PCEF to the PCEF.

8. The method according to claim 1, wherein, the method further comprises:
the V-PCRF creating a quality of service, QoS, rule according to the second PCC rule and sending the QoS rule to a Bearer Binding and Event Reporting Function, BBERF,
and,
wherein:
the application information comprises an application identifier and an APPLICATION_STOP event trigger;
the method further comprises:
the V-PCRF sending an instruction of deleting the QoS rule that is installed in the BBERF to the BBERF.

9. A visited policy control and charging rules function, V-PCRF, **characterized by** comprising:
a receiving module, configured to receive application information of a detected application reported by a traffic detection function, TDF;
a decision module, configured to create a second policy and charging control, PCC, rule according to the application information and a first PCC rule that is provisioned by a home policy control and charging rule function, H-PCRF, for detecting the application;
a sending module, configured to send the second PCC rule to a policy and charging enforcement function, PCEF;
wherein:
the application information comprises an application identifier and corresponding flow description information; the first PCC rule includes the application identifier and corresponding Quality of Service, QoS, information , the second PCC rule includes the flow description information and the QoS information,
if service data flow description of the application is deducible, the flow description information is service data flow description, and the decision module is further configured to set a service data flow filter in the second PCC rule according to the service data flow description.

10. The V-PCRF according to claim 9, wherein:
if service data flow description of the application is not deducible, the flow description information is encapsulation flow description, and the decision module is further configured to set the service data flow filter in the second PCC rule according to the encapsulation flow description,
and,
wherein:
the encapsulation flow description is a specific differentiated service code point, DSCP, tag that is marked in an IPv4 packet header of a packet of the application or a specific flow label that is marked in an IPv6 packet header of the application; or is packet header information by performing user datagram protocol UDP encapsulation outside a packet of the application.

11. The V-PCRF according to claim 9, wherein:
the application information comprises an application identifier and an APPLICATION_STOP event trigger;
the decision module is further configured to make an instruction of deleting the second PCC rule that is installed in the PCEF;
the sending module is further configured to send an instruction of deleting the second PCC rule that is installed in the PCEF to the PCEF.

12. The V-PCRF according to claim 9, wherein:
the decision module is further configured to create a quality of service, QoS, rule according to the second PCC rule;
the sending module is further configured to send the QoS rule to a Bearer Binding and Event Reporting Function, BBERF,
and,
wherein:
the application information comprises an application identifier and an APPLICATION_STOP event trigger;
the decision module is further configured to make an instruction of deleting the QoS rule that is installed in the BBERF;
the sending module is further configured to send an instruction of deleting the QoS rule that is installed in the BBERF to the BBERF.

13. A computer program comprising program instructions, wherein the program instructions, when executed by a V-PCRF, enable the V-PCRF to perform the steps of the method of any one of claims 1-5.

14. A carrier carrying the computer program according to claim 13.

## Patentansprüche

1. Verfahren zur Anwendungserkennung und -steuerung in einem Roaming-Szenario, **gekennzeichnet dadurch, dass** es Folgendes umfasst:
eine Funktion für Richtliniensteuerung und Gebührenregeln in einem besuchten Netzwerk (Visited Network Policy and Charging Rules Function, V-PCRF) empfängt eine Anwendungsinformation einer erkannten Anwendung, die von einer Verkehrserkennungsfunktion (Traffic Detection Function, TDF) gemeldet wird (S301);
die V-PCRF erstellt eine zweite Regel für Richtlinien- und Gebührensteuerung (Policy and Charging Control, PCC) gemäß der Anwendungsinformation und einer ersten PCC-Regel, die durch eine Heimat-Richtliniensteuerungs- und Gebührenfunktion (Home Policy Control and Charging Function, H-PCRF) zum Erkennen der Anwendung bereitgestellt wird (S302);
die V-PCRF sendet die zweite PCC-Regel an eine Richtlinien- und Gebührendurchsetzungsfunktion (Policy and Charging Enforcement Function, PCEF) (S303) ;
wobei:
die Anwendungsinformation eine Anwendungskennung und entsprechende Flussbeschreibungsinformation umfasst; die erste PCC-Regel die Anwendungskennung und eine entsprechende Dienstqualität(Quality of Dienst, QoS)-Information enthält und die zweite PCC-Regel die Flussbeschreibungsinformation und die QoS-Information enthält;
wobei, wenn eine Dienstdatenflussbeschreibung der Anwendung ableitbar ist, die Flussbeschreibungsinformation eine Dienstdatenflussbeschreibung ist und die V-PCRF einen Dienstdatenflussfilter in der zweiten PCC-Regel entsprechend der Dienstdatenflussbeschreibung einstellt.

2. Verfahren nach Anspruch 1, wobei:
wenn die Dienstdatenflussbeschreibung der Anwendung nicht ableitbar ist, die Flussbeschreibungsinformation die Einkapselungsflussbeschreibung ist und die V-PCRF den Dienstdatenflussfilter in der zweiten PCC-Regel entsprechend der Einkapselungsflussbeschreibung einstellt.

3. Verfahren nach Anspruch 2, wobei:
die Einkapselungsflussbeschreibung ein spezifischer differenzierter Dienstcodepunkt(Differentiated Dienst Code Point, DSCP)-Tag ist, der in einem I Pv4-Paketkopf eines Pakets der Anwendung markiert ist, oder
ein bestimmtes Flussetikett ist, das in einem I Pv6-Paketkopf der Anwendung markiert ist; oder die Paketkopfinformation durch Durchführen einer Benutzer-Datagrammprotokoll(User Datagram Protocol, UDP)-Einkapselung außerhalb des Pakets der Anwendung ist.

4. Verfahren nach Anspruch 2 oder 3, das Verfahren ferner umfassend:
die TDF führt eine Paketeinkapselung für Pakete der erkannten Anwendung mit der Einkapselungsflussbeschreibung durch;
die PCEF führt eine Richtliniendurchsetzung für Pakete der Anwendung mit der zweiten PCC-Regel durch und löscht die Einkapselungsflussbeschreibung.

5. Verfahren nach Anspruch 1, wobei:
bevor die V-PCRF die von der TDF gemeldeten Anwendungsinformation der erkannten Anwendung empfängt, das Verfahren ferner umfasst:
nachdem die V-PCRF die durch die H-PCRF bereitgestellte erste PCC-Regel empfängt, erzeugt die V-PCRF eine Anwendungserkennungs- und - steuerungs(Application Detection and Control, ADC)-Regel zum Erkennen der Anwendung gemäß den folgenden Regeln und stellt die erzeugte ADC-Regel für die TDF bereit:
die V-PCRF stellt einen Wert des Attributwertpaars (Attribute Value Pair, AVP) des ADC-Regelnamens in der ADC-Regel ein;
wenn TDF-Anwendungskennung-AVP, Flussstatus-AVP, Prioritäts-AVP, maximales angefordertes Bandbreiten-UL-AVP, maximales angefordertes Bandbreiten-DL-AVP, Überwachungsschlüssel-AVP, Umleitungsinformations-AVP, Dienstkennungs-AVP, Bewertungsgruppen-AVP, Berichterstattungsstufen-AVP, Online-AVP, Offline-AVP oder Verbrauchserfassungsverfahren-AVP in der ersten PCC-Regel enthalten sind, stellt die V-PCRF die Werte des entsprechenden TDF-Anwendungskennung-AVP, Flussstatus-AVP, Prioritäts-AVP, maximalen angeforderten Bandbreiten-UL-AVP, maximalen angeforderten Bandbreiten-DL-AVP, Überwachungsschlüssel-AVP, Umleitungsinformations-AVP, Dienstkennungs-AVP, Bewertungsgruppen-AVP, Berichterstattungsstufen-AVP, Online-AVP, Offline-AVP oder Verbrauchserfassungsverfahren-AVP in der ADC-Regel gemäß den Werten des TDF-Anwendungskennung-AVP, Flussstatus-AVP, Prioritäts-AVP, maximalen angeforderten Bandbreiten-UL-AVP, maximalen angeforderten Bandbreiten-DL-AVP, Überwachungsschlüssel-AVP, Umleitungsinformations-AVP, Dienstkennungs-AVP, Bewertungsgruppen-AVP, Berichterstattungsstufen-AVP, Online-AVP, Offline-AVP oder Verbrauchserfassungsverfahren-AVP in der ersten PCC-Regel ein.

6. Verfahren nach Anspruch 1 oder 2, wobei:
die V-PCRF die zweite PCC-Regel gemäß den folgenden Regeln erzeugt: die V-PCRF stellt einen Wert des Gebührenregelnamen-AVP in der zweiten PCC-Regel ein;
die V-PCRF stellt die Werte des entsprechenden QoS-Informations-AVP, Flussstatus-AVP und Prioritäts-AVP in der zweiten PCC-Regel gemäß den Werten des Dienstqualitäts(QoS)-Informations-AVP, Flussstatus-AVP und Prioritäts-AVP in der ersten PCC-Regel ein;
wenn Dienstkennungs-AVP, Bewertungsgruppen-AVP, Berichterstattungsstufen-AVP, Online-AVP, Offline-AVP und Verbrauchserfassungsverfahren-AVP in der ersten PCC-Regel enthalten sind, die von der H-PCRF bereitgestellt wird, und die TDF keine anwendungsbasierte Gebühren unterstützt, dann stellt die V-PCRF Werte des entsprechenden Dienstkennungs-AVP, Bewertungsgruppen-AVP, Berichterstattungsstufen-AVP, Online-AVP, Offline-AVP und Verbrauchserfassungsverfahren-AVP in der zweiten PCC-Regel gemäß den Werten des Dienstkennungs-AVP, Bewertungsgruppen-AVP, Berichterstattungsstufen-AVP, Online-AVP, Offline-AVP und Verbrauchserfassungsverfahren-AVP in der ersten PCC-Regel ein;
die V-PCRF stellt einen Wert des Flussinformation-AVP in der zweiten PCC-Regel gemäß dem Wert des Flussinformation-AVP ein, der von der TDF gemeldet wird.

7. Verfahren nach Anspruch 1, wobei:
die Anwendungsinformation eine Anwendungskennung und einen APPLICATION_STOP-Ereignisauslöser umfasst;
das Verfahren ferner umfasst:
die V-PCRF sendet eine Anweisung zum Löschen der zweiten PCC-Regel, die in der PCEF installiert ist, an die PCEF.

8. Verfahren nach Anspruch 1, wobei das Verfahren ferner umfasst:
die V-PCRF erzeugt eine Regel für Dienstqualität (Quality of Dienst, QoS) gemäß der zweiten PCC-Regel und sendet die QoS-Regel an eine Trägerbindungs- und Ereignisberichterstattungsfunktion (Bearer Binding and Event Reporting Function, BBERF), und
wobei:
die Anwendungsinformation eine Anwendungskennung und einen APPLICATION_STOP-Ereignisauslöser umfasst;
das Verfahren ferner umfasst:
die V-PCRF sendet eine Anweisung zum Löschen der QoS-Regel, die in der BBERF installiert ist, an die BBERF.

9. Funktion für Richtliniensteuerung und Gebührenregeln in einem besuchten Netzwerk (Visited Network Policy and Charging Rules Function, V-PCRF), **dadurch gekennzeichnet, dass** sie Folgendes umfasst:
ein Empfangsmodul, das konfiguriert ist, um eine Anwendungsinformation einer erkannten Anwendung, die von einer Verkehrserkennungsfunktion (Traffic Detection Function,TDF) gemeldet wird, zu empfangen;
ein Entscheidungsmodul, das konfiguriert ist, um eine zweite Regel für Richtlinien- und Gebührensteuerung (Policy and Charging Control, PCC) gemäß der Anwendungsinformation und einer ersten PCC-Regel, die durch eine Heimat-Richtliniensteuerungs- und Gebührenfunktion (Home Policy Control and Charging Rule Function, H-PCRF) zum Erkennen der Anwendung bereitgestellt wird, zu erzeugen;
ein Sendemodul, das konfiguriert ist, um die zweite PCC-Regel an eine Richtlinien- und Gebührendurchsetzungsfunktion (Policy and Charging Enforcement Function, PCEF) zu senden;
wobei:
die Anwendungsinformation eine Anwendungskennung und entsprechende Flussbeschreibungsinformation umfasst; die erste PCC-Regel die Anwendungskennung und eine entsprechende Dienstqualität(Quality of Dienst, QoS)-Information enthält, die zweite PCC-Regel die Flussbeschreibungsinformation und die QoS-Information enthält,
wenn eine Dienstdatenflussbeschreibung der Anwendung ableitbar ist, die Flussbeschreibungsinformation die Dienstdatenflussbeschreibung ist, und das Entscheidungsmodul ferner konfiguriert ist, um einen Dienstdatenflussfilter in der zweiten PCC-Regel entsprechend der Dienstdatenflussbeschreibung einzustellen.

10. V-PCRF nach Anspruch 9, wobei:
wenn die Dienstdatenflussbeschreibung der Anwendung nicht ableitbar ist, die Flussbeschreibungsinformation eine Einkapselungsflussbeschreibung ist, und das Entscheidungsmodul ferner konfiguriert ist, um den Dienstdatenflussfilter in der zweiten PCC-Regel entsprechend der Einkapselungsflussbeschreibung einzustellen, und
wobei:
die Einkapselungsflussbeschreibung ein spezifischer differenzierter Dienstcodepunkt (Differentiated Dienst Code Point, DSCP)-Tag ist, der in einem I Pv4-Paketkopf eines Pakets der Anwendung markiert ist, oder ein bestimmtes Flussetikett ist, das in einem I Pv6-Paketkopf der Anwendung markiert ist; oder die Paketkopfinformation durch Durchführen einer Benutzer-Datagrammprotokoll(User Datagram Protocol, UDP)-Einkapselung außerhalb eines Pakets der Anwendung ist.

11. V-PCRF nach Anspruch 9, wobei:
die Anwendungsinformation eine Anwendungskennung und einen APPLICATION_STOP-Ereignisauslöser umfasst;
das Entscheidungsmodul ferner konfiguriert ist, um eine Anweisung zum Löschen der zweiten PCC-Regel herzustellen, die in der PCEF installiert ist;
das Sendemodul ferner konfiguriert ist, um eine Anweisung zum Löschen der zweiten PCC-Regel, die in der PCEF installiert ist, an die PCEF zu senden.

12. V-PCRF nach Anspruch 9, wobei:
das Entscheidungsmodul ferner konfiguriert ist, um eine Regel für Dienstqualität (Quality of Dienst, QoS) gemäß der zweiten PCC-Regel zu erzeugen;
das Sendemodul ferner konfiguriert ist, um die QoS-Regel an eine Trägerbindungs- und Ereignisberichterstattungsfunktion (Bearer Binding and Event Reporting Function, BBERF) zu senden, und
wobei:
die Anwendungsinformation eine Anwendungskennung und einen APPLICATION_STOP-Ereignisauslöser umfasst;
das Entscheidungsmodul ferner konfiguriert ist, um eine Anweisung zum Löschen der QoS-Regel herzustellen, die in der BBERF installiert ist;
das Sendemodul ferner konfiguriert ist, um eine Anweisung zum Löschen der QoS-Regel, die in der BBERF installiert ist, an die BBERF zu senden.

13. Computerprogramm, umfassend Programmanweisungen, wobei die Programmanweisungen bei Ausführung durch eine V-PCRF die V-PCRF in die Lage versetzen, die Schritte des Verfahrens nach einem der Ansprüche 1 bis 5 durchzuführen.

14. Träger, der das Computerprogramm nach Anspruch 13 trägt.

## Revendications

1. Procédé de détection et de commande d'application dans un scénario d'itinérance, **caractérisé en ce qu'**il comprend les étapes suivantes:
une fonction de règles de facturation et de commande de politique visitée (V-PCRF) recevant des informations d'application d'une application détectée rapportées par une fonction de détection de trafic (TDF) (S301) ;
la fonction V-PCRF créant une seconde règle de commande de politique et de facturation (PCC) en fonction des informations d'application et d'une première règle de commande PCC qui est mise en place par une fonction de facturation et de commande de politique domestique (H-PCRF) pour détecter l'application (S302);
la fonction V-PCRF envoyant la seconde règle de commande PCC à une fonction d'exécution de politique et de facturation (PCEF) (S303);
dans lequel:
les informations d'application comportent un identifiant d'application et des informations de description de flux correspondantes; la première règle de commande PCC comprend l'identifiant d'application et des informations de qualité de service (QoS) correspondantes et la seconde règle de commande PCC comprend les informations de description de flux et les informations de qualité de service;
dans lequel, si une description de flux de données de service de l'application est déductible, les informations de description de flux sont une description de flux de données de service et la fonction V-PCRF règle un filtre de flux de données de service dans la seconde règle de commande PCC en fonction de la description de flux de données de service.

2. Procédé selon la revendication 1, dans lequel:
si une description de flux de données de service de l'application n'est pas déductible, les informations de description de flux sont une description de flux d'encapsulation et la fonction V-PCRF règle le filtre de flux de données de service dans la seconde règle de commande PCC en fonction de la description de flux d'encapsulation.

3. Procédé selon la revendication 2, dans lequel:
la description de flux d'encapsulation est une balise de point de code de services différentiés (DSCP) spécifique qui est marquée dans un en-tête de paquet I Pv4 d'un paquet de l'application ou une étiquette de flux spécifique qui est marquée dans un en-tête de paquet IPv6 de l'application; ou est des informations d'en-tête de paquet en réalisant une encapsulation de protocole de datagramme d'utilisateur (UDP) à l'extérieur du paquet de l'application.

4. Procédé selon la revendication 2 ou 3, le procédé comprend en outre:
la fonction TDF réalisant une encapsulation de paquet sur des paquets de l'application détectée avec la description de flux d'encapsulation ;
la fonction PCEF réalisant une exécution de politique sur des paquets de l'application avec la seconde règle de commande PCC et supprimant la description de flux d'encapsulation.

5. Procédé selon la revendication 1, dans lequel:
avant que la fonction V-PCRF ne reçoive les informations d'application de l'application détectée rapportées par la fonction TDF, le procédé comprend en outre les étapes suivantes:
après que la fonction V-PCRF reçoit la première règle de commande PCC mise en place par la fonction H-PCRF, la fonction V-PCRF crée une règle de détection et de commande d'application (ADC) pour détecter l'application en fonction des règles suivantes et met en place la règle ADC créée pour la fonction TDF:
la fonction V-PCRF définit une valeur d'une paire de valeurs d'attribut (AVP) de nom de règle ADC dans la règle ADC;
si une paire AVP d'identifiant d'application de fonction TDF, une paire AVP d'état de flux, une paire AVP de priorité, une paire AVP de liaison montante (UL) à largeur de bande demandée maximale, une paire AVP de liaison descendante (DL) à largeur de bande demandée maximale, une paire AVP de clé de surveillance, une paire AVP d'informations de redirection, une paire AVP d'identifiant de service, une paire AVP de groupe de tarification, une paire AVP de niveau de compte rendu, une paire AVP en ligne, une paire AVP hors ligne ou une paire AVP de procédé de mesure sont incluses dans la première règle de commande PCC, les valeurs de réglage de fonction V-PCRF de la paire AVP d'identifiant d'application de fonction TDF correspondante, de la paire AVP d'état de flux correspondante, de la paire AVP de priorité correspondante, de la paire AVP de liaison montante (UL) à largeur de bande demandée maximale correspondante, de la paire AVP de liaison descendante (DL) à largeur de bande demandée maximale correspondante, de la paire AVP de clé de surveillance correspondante, de la paire AVP d'informations de redirection correspondante, de la paire AVP d'identifiant de service correspondante, de la paire AVP de groupe de tarification correspondante, de la paire AVP de niveau de compte rendu correspondante, de la paire AVP en ligne correspondante, de la paire AVP hors ligne correspondante ou de la paire AVP de procédé de mesure correspondante dans la règle ADC en fonction de valeurs de la paire AVP d'identifiant d'application de fonction TDF, de la paire AVP d'état de flux, de la paire AVP de priorité, de la paire AVP de liaison montante (UL) à largeur de bande demandée maximale, de la paire AVP de liaison descendante (DL) à largeur de bande demandée maximale, de la paire AVP de clé de surveillance, de la paire AVP d'informations de redirection, de la paire AVP d'identifiant de service, de la paire AVP de groupe de tarification, de la paire AVP de niveau de compte rendu, de la paire AVP en ligne, de la paire AVP hors ligne ou de la paire AVP de procédé de mesure dans la première règle de commande PCC.

6. Procédé selon la revendication 1 ou 2, dans lequel:
la fonction V-PCRF crée la seconde règle de commande PCC en fonction des règles suivantes:
la fonction V-PCRF définit une valeur d'une paire AVP de nom de règle de facturation dans la seconde règle de commande PCC;
la fonction V-PCRF définit des valeurs d'une paire AVP d'informations de qualité de service correspondante, d'une paire AVP d'état de flux correspondante et d'une paire AVP de priorité correspondante dans la seconde règle de commande PCC en fonction de valeurs de la paire AVP d'informations de qualité de service (Qos), de la paire AVP d'état de flux et de la paire AVP de priorité dans la première règle de commande PCC;
si une paire AVP d'identifiant de service, une paire AVP de groupe de tarification, une paire AVP de niveau de compte rendu, une paire AVP en ligne, une paire AVP hors ligne et une paire AVP de procédé de mesure sont incluses dans la première règle de commande PCC mise en place par la fonction H-PCRF et si la fonction TDF ne prend pas en charge une facturation basée sur une application, alors la fonction V-PCRF définit des valeurs de la paire AVP d'identifiant de service correspondante, de la paire AVP de groupe de tarification correspondante, de la paire AVP de niveau de compte rendu correspondante, de la paire AVP en ligne correspondante, de la paire AVP hors ligne correspondante et de la paire AVP de procédé de mesure correspondante dans la seconde règle de commande PCC en fonction de valeurs de la paire AVP d'identifiant de service, de la paire AVP de groupe de tarification, de la paire AVP de niveau de compte rendu, de la paire AVP en ligne, de la paire AVP hors ligne et de la paire AVP de procédé de mesure dans la première règle de commande PCC;
la fonction V-PCRF définit une valeur d'une paire AVP d'informations de flux dans la seconde règle de commande PCC en fonction de la valeur de la paire AVP d'informations de flux qui est rapportée par la fonction TDF.

7. Procédé selon la revendication 1, dans lequel:
les informations d'application comprennent un identifiant d'application et un déclencheur d'événement APPLICATION_STOP;
le procédé comprend en outre l'étape suivante:
la fonction V-PCRF envoie une instruction de suppression de la seconde règle de commande PCC qui est installée dans la fonction PCEF à la fonction PCEF.

8. Procédé selon la revendication 1, dans lequel le procédé comprend en outre l'étape suivante:
la fonction V-PCRF crée une règle de qualité de service (QoS) en fonction de la seconde règle de commande PCC et envoie la règle de qualité de service à une fonction de liaison de porteuse et de rapport d'événement (BBERF),
et
dans lequel:
les informations d'application comprennent un identifiant d'application et un déclencheur d'événement APPLICATION_STOP;
le procédé comprend en outre l'étape suivante:
la fonction V-PCRF envoie une instruction de suppression de la règle de qualité de service qui est installée dans la fonction BBERF à la fonction BBERF.

9. Fonction de règles de facturation et de commande de politique visitée (V-PCRF) **caractérisée par le fait qu'**elle comprend:
un module de réception, configuré pour recevoir des informations d'application d'une application détectée rapportées par une fonction de détection de trafic (TDF);
un module de décision, configuré pour créer une seconde règle de commande de politique et de facturation (PCC) en fonction des informations d'application et d'une première règle de commande PCC qui est mise en place par une fonction de règle de facturation et de commande de politique domestique (H-PCRF) pour détecter l'application;
un module d'envoi, configuré pour envoyer la seconde règle de commande PCC à une fonction d'exécution de politique et de facturation (PCEF);
dans laquelle:
les informations d'application comportent un identifiant d'application et des informations de description de flux correspondantes; la première règle de commande PCC comprend l'identifiant d'application et des informations de qualité de service (QoS) correspondantes, la seconde règle de commande PCC comprend les informations de description de flux et les informations de qualité de service,
si une description de flux de données de service de l'application est déductible, les informations de description de flux sont une description de flux de données de service et le module de décision est en outre configuré pour régler un filtre de flux de données de service dans la seconde règle de commande PCC en fonction de la description de flux de données de service.

10. Fonction V-PCRF selon la revendication 9, dans laquelle:
si une description de flux de données de service de l'application n'est pas déductible, les informations de description de flux sont une description de flux d'encapsulation et le module de décision est en outre configuré pour régler le filtre de flux de données de service dans la seconde règle de commande PCC en fonction de la description de flux d'encapsulation,
et
dans laquelle:
la description de flux d'encapsulation est une balise de point de code de services différentiés (DSCP) spécifique qui est marquée dans un en-tête de paquet I Pv4 d'un paquet de l'application ou une étiquette de flux spécifique qui est marquée dans un en-tête de paquet I Pv6 de l'application; ou est des informations d'en-tête de paquet en réalisant une encapsulation de protocole de datagramme d'utilisateur (UDP) à l'extérieur d'un paquet de l'application.

11. Fonction V-PCRF selon la revendication 9, dans laquelle:
les informations d'application comprennent un identifiant d'application et un déclencheur d'événement APPLICATION_STOP;
le module de décision est en outre configuré pour établir une instruction de suppression de la seconde règle de commande PCC qui est installée dans la fonction PCEF ;
le module d'envoi est en outre configuré pour envoyer une instruction de suppression de la seconde règle de commande PCC qui est installée dans la fonction PCEF à la fonction PCEF.

12. Fonction V-PCRF selon la revendication 9, dans laquelle:
le module de décision est en outre configuré pour créer une règle de qualité de service (QoS) en fonction de la seconde règle de commande PCC;
le module d'envoi est en outre configuré pour envoyer la règle de qualité de service à une fonction de liaison de porteuse et de rapport d'événement (BBERF),
et
dans laquelle:
les informations d'application comprennent un identifiant d'application et un déclencheur d'événement APPLICATION_STOP;
le module de décision est en outre configuré pour établir une instruction de suppression de la règle de qualité de service qui est installée dans la fonction BBERF;
le module d'envoi est en outre configuré pour envoyer une instruction de suppression de la règle de qualité de service qui est installée dans la fonction BBERF à la fonction BBERF.

13. Programme d'ordinateur comprenant des instructions de programme, dans lequel les instructions de programme, lorsqu'elles sont exécutées par une fonction V-PCRF, permettent à la fonction V-PCRF de réaliser les étapes du procédé selon l'une quelconque des revendications 1 à 5.

14. Support comportant le programme d'ordinateur selon la revendication 13.
